# EUROPEAN PATENT APPLICATION

(11) **EP 2 624 559 A1**
(43) Date of publication of application: **07.08.2013**
(21) Application number: 13152866.3
(22) Date of filing: 28.01.2013
(51) Int. Cl.: H04N 7/26, H04N 13/00, H04N 13/02, H04N 7/32

(54) **Image transmission device and method, and image reproduction device and method**

(30) Priority: 31.01.2012 KR 20120010007
(71) Applicant: Samsung Electronics Co., Ltd, Gyeonggi-do 443-742 (KR)
(72) Inventor: Lee, Seok, 445-724 Gyeonggi-do (KR); Wey, Ho Cheon, 463-705 Gyeonggi-do (KR); Lee, Seung Sin, 448-130 Gyeonggi-do (KR); Lee, Jae Joon, 138-220 Seoul (KR)
(74) Representative: Grootscholten, Johannes A.M.

(57) **Abstract**

Provided are an image transmission device and method, and an image reproduction device and method. The image transmission device and the image reproduction device may provide a multi-view three-dimensional (3D) image to a user by processing a color image and a depth image using information about an image mode of the 3D image format, additional information based on the color image corresponding to a satellite view, or additional information based on the depth image.

## Description

### BACKGROUND

### 1. Field

One or more example embodiments relate to an image transmission device and method, and an image reproduction device and method, and more particularly, to a device and method for providing a three-dimensional (3D) image by processing a color image and a depth image corresponding to a plurality of views.

### 2. Description of the Related Art

In contrast with a two-dimensional (2D) image, a three-dimensional (3D) image may provide a user with a realistic effect through the use of spatial depth. A 3D image processing system may refer to a technology that provides a 3D image service using an image having a greater number of views when compared to a stereoscopic image. The 3D image processing system may convert and store, in a predetermined format, a color image obtained using N multi-view cameras, a depth image obtained using a depth value prediction or a depth camera, and additional information for a multi-view reproduction.

The 3D image may be compressed and transmitted, and may be reproduced as a 2D image, a stereo image, or a multi-view image in a multi-view scheme according to user intent or a type of a display device. Thus, an image reproduction device of the 3D image may reproduce a transmitted color image, depth image, and additional information in various schemes according to a display device.

Basically, the image reproduction device may select, without restriction, a 2D image of a desired view among N transmitted views, and display the selected 2D image through a conventional 2D display device. Further, the image reproduction device may display the 2D image using various types of 3D display devices. The image reproduction device may reproduce a 3D image of a plurality of views using a 3D display device that may express M views fewer than the N transmitted views. The image reproduction device may identify a location of a viewer, and reproduce a 3D image of a view corresponding to the location of the viewer.

Accordingly, there is a desire for a message format associated with a color image and a depth image to reproduce various formats of 3D images while ensuring the image reproduction device remains compatible with a conventional display device.

### SUMMARY

The foregoing and/or other aspects are achieved by providing an image transmission device, including an image converter to convert a color image and a depth image corresponding to a plurality of views according to a three-dimensional (3D) image format, and a bitstream transmitter to transmit, to an image reproduction device, a bitstream including additional information associated with the 3D image format, and the converted color image and the converted depth image.

The image transmission device may further include an image encoder to encode the color image and the depth image according to an inter-view prediction scheme.

The additional information may include at least one of information about an image mode of the 3D image format, additional information based on the color image corresponding to a satellite view, and additional information based on the depth image.

The additional information based on the color image corresponding to a satellite view may include at least one of identification information indicating whether the color image of a satellite view is included in the bitstream, identification information indicating whether a resolution of the color image of a satellite view included in the bitstream is different from a base resolution, ratio information indicating a ratio of a resolution of the color image of a satellite view included in the bitstream to a base resolution, and conversion information indicating a resolution conversion scheme for an inter-view prediction scheme of the color image of a satellite view included in the bitstream.

The additional information based on the depth image may include at least one of image characteristic information indicating a generating scheme of the depth image included in the bitstream, identification information indicating whether a resolution of the depth image included in the bitstream is different from a base resolution, ratio information indicating a ratio of a resolution of the depth image included in the bitstream to a base resolution, conversion information indicating a resolution conversion scheme of the depth image included in the bitstream for an inter-view prediction scheme, and cause information indicating a cause of a difference in resolution when a resolution of the depth image included in the bitstream is different from a base resolution.

The foregoing and/or other aspects are achieved by providing an image reproduction device, including a bitstream receiver to receive, from an image transmission device, a bitstream including a color image and a depth image of a plurality of views converted according to a 3D image format, and additional information associated with the 3D image format, and an image generator to generate an output image to be reproduced in a display device by processing the color image and the depth image according to the additional information.

The image reproduction device may further include an image decoder to decode the color image and the depth image included in the bitstream according to an inter-view prediction scheme.

The image reproduction device may further include an image postprocessing unit to perform a postprocessing of the depth image to enhance an image quality of the color image and or the depth image.

The foregoing and/or other aspects are achieved by providing an image reproduction device, including an additional information extractor to extract, from a bitstream, additional information associated with a 3D image format, an image generator to generate an output image by processing a color image and a depth image of a plurality of views according to the additional information, and an image display unit to display the generated output image.

The image reproduction device may further include an image decoder to decode the color image and the depth image included in the bitstream according to an inter-view prediction scheme.

The image reproduction device may further include an image postprocessing unit to perform a postprocessing to enhance an image quality of the color image and or the depth image.

The foregoing and/or other aspects are achieved by providing a method of transmitting an image, the method including converting a color image and a depth image corresponding to a plurality of views according to a 3D image format, and transmitting, to an image reproduction device, a bitstream including additional information associated with the 3D image format, and the converted color image and the converted depth image.

The method may further include encoding the color image and the depth image according to an inter-view prediction scheme.

The foregoing and/or other aspects are achieved by providing a method of reproducing an image, the method including receiving, from an image transmission device, a bitstream including a color image and a depth image of a plurality of views converted according to a 3D image format, and additional information associated with the 3D image format, and generating an output image to be reproduced in a display device by processing the color image and the depth image according to the additional information.

The method may further include decoding the color image and the depth image included in the bitstream according to an inter-view prediction scheme.

The method may further include performing a postprocessing on a depth image to enhance an image quality of the color image and or the depth image.

The foregoing and/or other aspects are achieved by providing a method of reproducing an image, the method including extracting, from a bitstream, additional information associated with a 3D image format, generating an output image by processing a color image and a depth image of a plurality of views according to the additional information, and displaying the generated output image.

The method may further include decoding the color image and the depth image included in the bitstream according to an inter-view prediction scheme.

The method may further include performing a postprocessing on a depth image to enhance an image quality of the color image and or the depth image.

The foregoing and/or other aspects are achieved by providing a recording medium on which an image program readable by an image reproduction device is recorded, wherein the image program may include a color image and a depth image corresponding to a plurality of views converted according to a 3D image format, and additional information associated with the 3D image format.

According to example embodiments, it is possible to provide various forms of 3D image services regardless of a display format by referring to additional information associated with a 3D image format when reproducing a color image and a depth image included in the 3D image format.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects will become apparent and more readily appreciated from the following description of embodiments, taken in conjunction with the accompanying drawings of which:
FIG. 1 illustrates an overall system configuration according to example embodiments;
FIG. 2 illustrates a detailed configuration of an image transmission device of FIG. 1;
FIG. 3 illustrates a detailed configuration of an image reproduction device of FIG. 1;
FIG. 4 illustrates a detailed configuration of another image reproduction device of FIG. 1;
FIG. 5 illustrates an image format for a multi-view 3D image according to example embodiments;
FIG. 6 illustrates another image format for a multi-view 3D image according to example embodiments;
FIG. 7 illustrates still another image format for a multi-view 3D image according to example embodiments;
FIG. 8 illustrates yet another image format for a multi-view 3D image according to example embodiments;
FIG. 9 illustrates a further another image format for a multi-view 3D image according to example embodiments;
FIG. 10 illustrates still another image format for a multi-view 3D image according to example embodiments;
FIG. 11 illustrates syntax of additional information according to example embodiments;
FIG. 12 illustrates an encoding/decoding operation based on an inter-view prediction scheme according to example embodiments;
FIG. 13 illustrates an operation of postprocessing a color image according to example embodiments;
FIG. 14 illustrates an operation of postprocessing a depth image according to example embodiments;
FIG. 15 illustrates an operation of decoding a depth image based on image characteristic information according to example embodiments;
FIG. 16 illustrates an operation of postprocessing a depth image based on image characteristic information according to example embodiments;
FIG. 17 illustrates a method of transmitting an image according to example embodiments;
FIG. 18 illustrates a method of reproducing an image according to example embodiments; and
FIG. 19 illustrates another method of reproducing an image according to example embodiments.

### DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

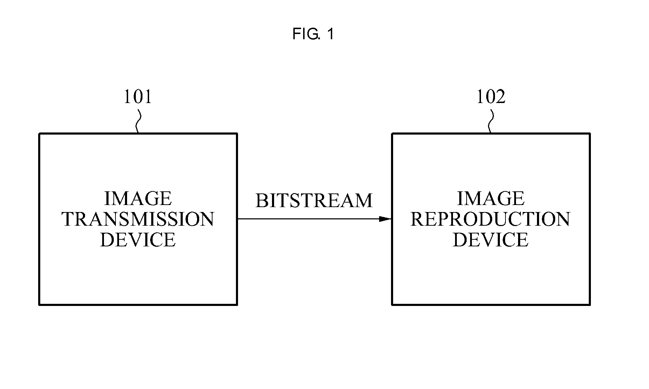

FIG. 1 illustrates an overall system configuration according to example embodiments.

Referring to FIG. 1, an image transmission device 101 may transmit a bitstream to an image reproduction device 102. Here, to provide a user with a multi-view three-dimensional (3D) image, the bitstream may include a color image and a depth image converted according to a 3D image format, and additional information associated with the 3D image format. In this instance, the color image and the depth image may correspond to a plurality of views. In particular, the color image and the depth image may correspond to at least one of a base view, a stereo view, and a satellite view.

The image reproduction device 102 may be configured to provide a user with a two-dimensional (2D) image or the 3D image. For example, the image reproduction device 102 may be used for a television (TV), a personal computer (PC), a home media device, a phone, and the like used in a home, and a 3D digital projector, and the like used in a theater. The image reproduction device 102 may be provided in a form of a wired terminal such as a TV, a PC, a digital versatile disc (DVD) player, a global positioning satellite (GPS) navigation unit, and the like, or a wireless terminal form such as a notebook, a feature phone, a tablet PC, a smart phone, a personal digital assistant (PDA), and the like. Although a form of the image reproduction device 102 according to example embodiments is described as various forms in the foregoing, the form may not be limited thereto. Additionally, the image reproduction device 102 may provide a user with a 2D image, a stereo 3D image, and a multi-view 3D image, through a compatible display.

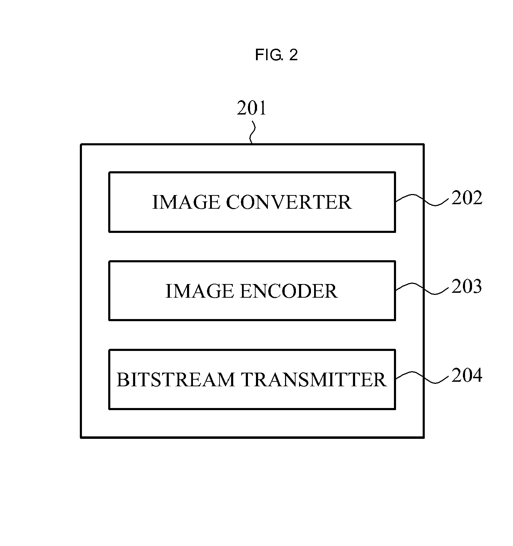

FIG. 2 illustrates a detailed configuration of an image transmission device of FIG. 1.

Referring to FIG. 2, an image transmission device 201 may include, for example, an image converter 202, an image encoder 203, and a bitstream transmitter 204.

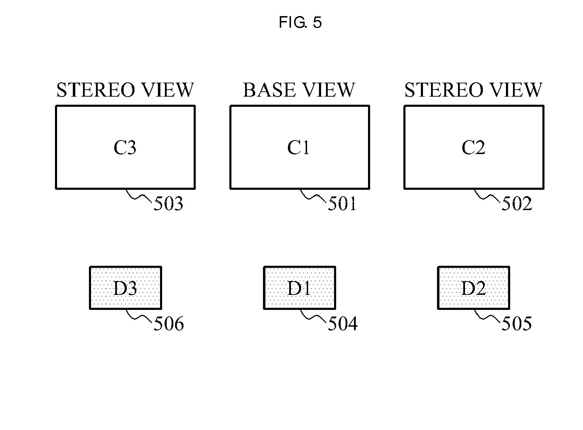

The image converter 202 may convert a color image and a depth image corresponding to a plurality of views according to a 3D image format. In this instance, the color image and the depth image may correspond to at least one of a base view, a stereo view, and a satellite view. The 3D image format will be further described with reference to FIGS. 5 through 10.

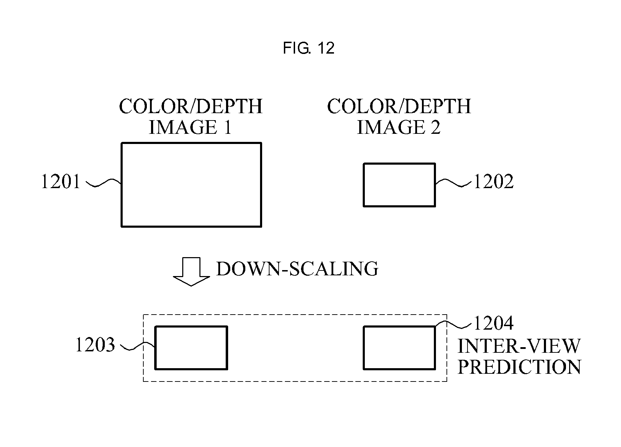

The image encoder 203 may encode the color image and the depth image converted according to the 3D image format. As an example, the image encoder 203 may encode the color image and the depth image according to an inter-view prediction scheme. The inter-view prediction scheme will be further described with reference to FIG. 12.

The bitstream transmitter 204 may transmit, to an image reproduction device, a bitstream including additional information associated with the 3D image format, and the color image and the depth image converted according to the 3D image format.

For example, the bitstream may include information about an image mode of the 3D image format, additional information based on the color image corresponding to the satellite view, and additional information based on the depth image. In this instance, the additional information based on the color image corresponding to the satellite view may include at least one of identification information indicating whether the color image of the satellite view is included in the bitstream, identification information indicating whether a resolution of the color image of the satellite view included in the bitstream is different from a base resolution, ratio information indicating a ratio of a resolution of the color image of the satellite view included in the bitstream to a base resolution, and conversion information indicating a resolution conversion scheme for an inter-view prediction scheme of the color image of the satellite view included in the bitstream.

The additional information based on the depth image may include at least one of image characteristic information indicating a generating scheme of the depth image included in the bitstream, identification information indicating whether a resolution of the depth image included in the bitstream is different from a base resolution, ratio information indicating a ratio of a resolution of the depth image included in the bitstream to a base resolution, conversion information indicating a resolution conversion scheme of the depth image included in the bitstream for an inter-view prediction scheme, and cause information indicating a cause of a difference in resolution when a resolution of the depth image included in the bitstream is different from a base resolution.

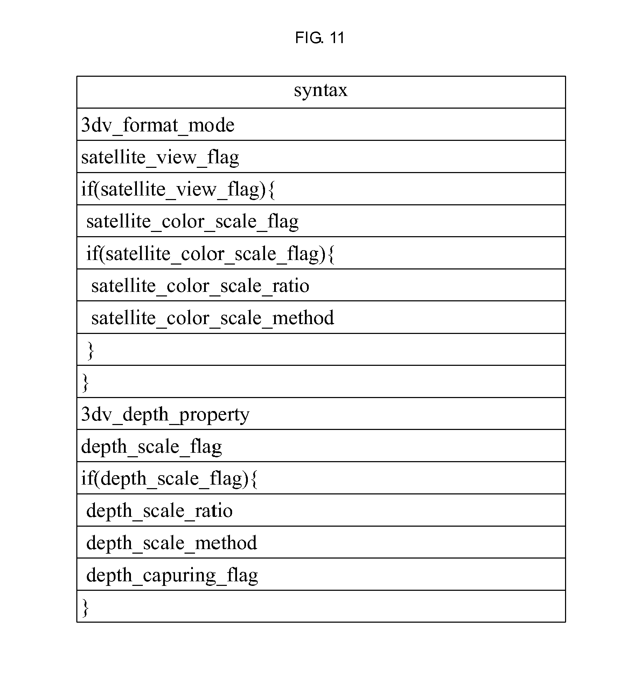

The additional information included in the bitstream will be further described with reference to FIG. 11.

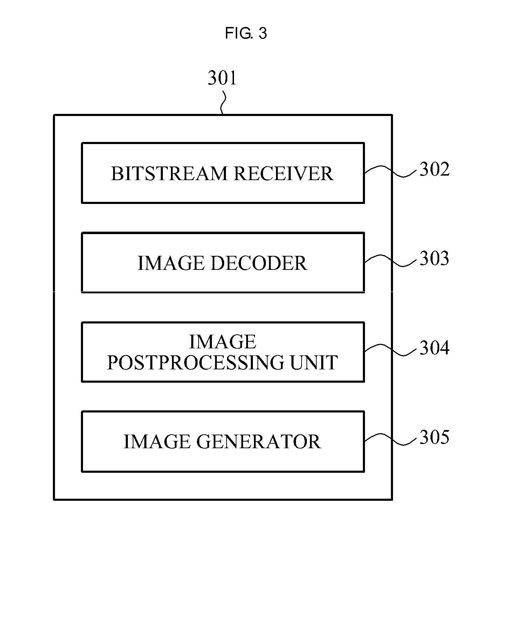

FIG. 3 illustrates a detailed configuration of an image reproduction device of FIG. 1.

Referring to FIG. 3, an image reproduction device 301 may include, for example, a bitstream receiver 302, an image decoder 303, an image postprocessing unit 304, and an image generator 305. The image reproduction device 301 of FIG. 3 may refer to a device provided in a form separate from a display device that displays an image.

The bitstream receiver 302 may receive a bitstream transmitted by an image transmitter. For example, the bitstream may include a color image and a depth image of a plurality of views converted according to a 3D image format, and additional information associated with the 3D image format. Here, the additional information may be equal to the additional information described with reference to FIG. 2.

The image decoder 303 may decode the color image and the depth image included in the bitstream. In this instance, the image decoder 303 may decode the color image and the depth image according to an inter-view prediction scheme.

The image postprocessing unit 304 may postprocess the decoded color image and depth image, thereby enhancing an image quality. For example, the image postprocessing unit 304 may postprocess, using the color image or the depth image, or both. The image postprocessing unit 304 may postprocess the depth image based on image characteristic information of the depth image.

The image generator 305 may generate an output image to be displayed or reproduced in the display device by processing the color image and the depth image according to the additional information. That is, the image generator 305 may process the color image and the depth image converted according to a 2D image format and the 3D image format based on an image that may be expressed in the display device. Then, the image generator 305 may generate an output image such as a stereo 3D image or a multi-view 3D image by processing the color image and the depth image.

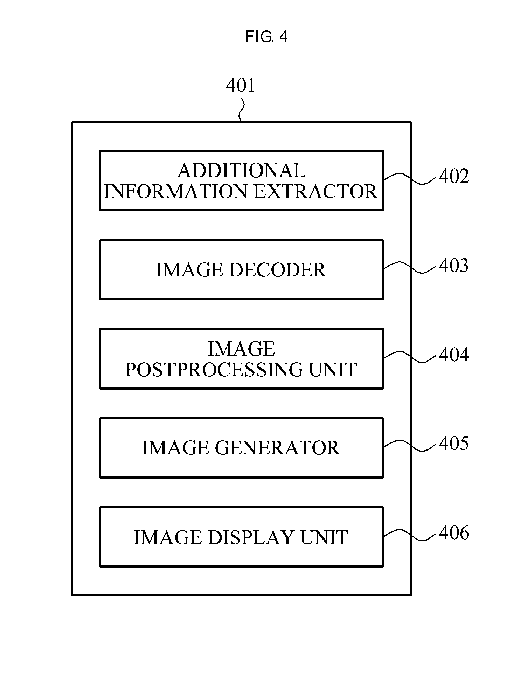

FIG. 4 illustrates a detailed configuration of another image reproduction device of FIG. 1.

Referring to FIG. 4, an image reproduction device 401 may include, for example, an additional information extractor 402, an image decoder 403, an image postprocessing unit 404, an image generator 405, and an image display unit 406. The image reproduction device 401 of FIG. 4 may refer to a device provided in a form including a display device that displays an image.

The additional information extractor 402 may extract, from a bitstream, additional information associated with a 3D image format. Here, the additional information may be equal to the additional information described with reference to FIG. 2.

The image decoder 403 may decode a color image and a depth image included in the bitstream according to an inter-view prediction scheme.

The image postprocessing unit 404 may perform a postprocessing to enhance a quality of the color image or the depth image.

The image generator 405 may generate an output image by processing the color image and the depth image of a plurality of views according to the additional information.

The image display unit 406 may display the output image. The image display unit 406 may display a 2D image, a stereo 3D image, or a multi-view 3D image.

FIG. 5 illustrates an image format for a multi-view 3D image according to example embodiments.

Referring to FIG. 5, an image format may include a color image C1 501 and a depth image D1 504 corresponding to a base view, and a color image C2 502, a color image C3 503, a depth image D2 505, and a depth image D3 506 corresponding to a stereo view.

In this instance, as illustrated in FIG. 5, a resolution of the depth image D1 504, the depth image D2 505, and the depth image D3 506 may be different from a base resolution that corresponds to a resolution of the color image C1 501 corresponding to the base view. Both of the color image C2 502 and the color image C3 503 corresponding to the stereo view may have the base resolution. In particular, a width and a height of each of the depth image D1 504, the depth image D2 505, and the depth image D3 506 may be expressed as fractions of a width and a height of the color image C1 501 having the base resolution. That is, the width and the height may have values of 1/N and 1/M, respectively. Here, values N and M denote natural numbers. For example, the values N and M may correspond to 2 or 4, and a resolution of the depth image D1 504, the depth image D2 505, and the depth image D3 506 may correspond to 1/2, 1/4, 1/8, 1/16, and the like of the base resolution.

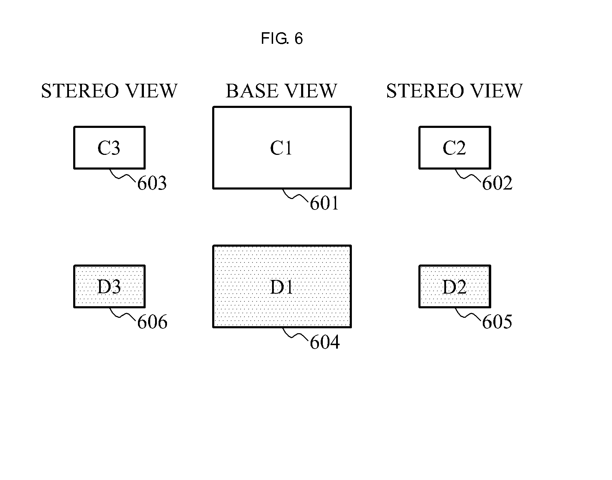

FIG. 6 illustrates another image format for a multi-view 3D image according to example embodiments.

Referring to FIG. 6, an image format may include a color image C1 601 and a depth image D1 604 corresponding to a base view, and a color image C2 602, a color image C3 603, a depth image D2 605, and a depth image D3 606 corresponding to a stereo view.

In this instance, as illustrated in FIG. 6, a resolution of the color image C2 602, the color image C3 603, the depth image D2 605, and the depth image D3 606 corresponding to the stereo view may be different from a base resolution that corresponds to a resolution of the color image C1 601 corresponding to the base view. A resolution of the depth image D1 604 may be equal to the base resolution.

In particular, a width and a height of each of the color image C2 602, the color image C3 603, the depth image D2 605, and the depth image D3 606 may be expressed as fractions of a width and a height of the color image C1 601 having the base resolution. That is, the width and the height may have values of 1/N and 1/M, respectively. Here, values N and M denote natural numbers. For example, the values N and M may correspond to 2 or 4, and a resolution of the color image C2 602, the color image C3 603, the depth image D2 605, and the depth image D3 606 may correspond to 1/2, 1/4, 1/8, 1/16, and the like of the base resolution.

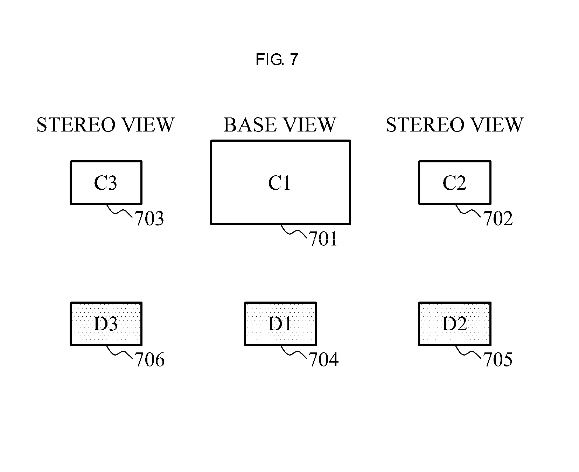

FIG. 7 illustrates still another image format for a multi-view 3D image according to example embodiments.

Referring to FIG. 7, an image format may include a color image C1 701 and a depth image D1 704 corresponding to a base view, and a color image C2 702, a color image C3 703, a depth image D2 705, and a depth image D3 706 corresponding to a stereo view.

In this instance, as illustrated in FIG. 7, a resolution of the color image C2 702, the color image C3 703, the depth image D1 704, the depth image D2 705, and the depth image D3 706 corresponding to the stereo view may be different from a base resolution that corresponds to a resolution of the color image C1 701 corresponding to the base view.

In particular, a width and a height of each of the color image C2 702, the color image C3 703, the depth image D1 704, the depth image D2 705, and the depth image D3 706 may be expressed as fractions of a width and a height of the color image C1 701 having the base resolution. That is, the width and the height may have values of 1/N and 1/M, respectively. Here, values N and M denote natural numbers. For example, the values N and M may correspond to 2 or 4, and a resolution of the color image C2 702, the color image C3 703, the depth image D1 704, the depth image D2 705, and the depth image D3 706 may correspond to 1/2, 1/4, 1/8, 1/16, and the like of the base resolution.

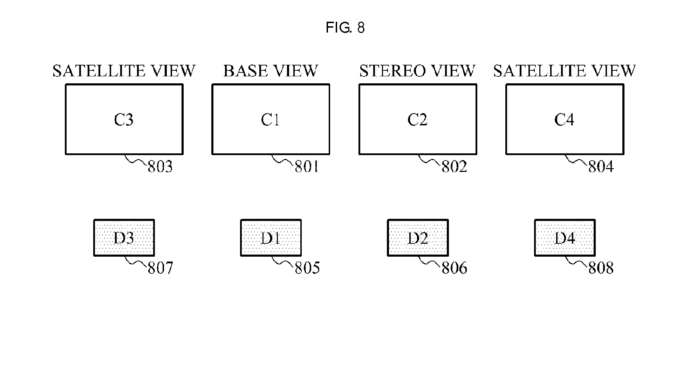

FIG. 8 illustrates yet another image format for a multi-view 3D image according to example embodiments.

Referring to FIG. 8, an image format may include a color image C1 801 and a depth image D1 805 corresponding to a base view, a color image C2 802 and a depth image D2 806 corresponding to a stereo view, and a color image C3 803 a color image C4 804, a depth image D3 807, and a depth image D4 808 corresponding to a satellite view.

In this instance, as illustrated in FIG. 8, a resolution of the depth image D1 805, the depth image D2 806, the depth image D3 807, and the depth image D4 808 may be different from a base resolution that corresponds to a resolution of the color image C1 801 corresponding to the base view. That is, the resolution of the depth image D1 805, the depth image D2 806, the depth image D3 807, and the depth image D4 808 may be lower than that of the base resolution.

In particular, a width and a height of each of the depth image D1 805, the depth image D2 806, the depth image D3 807, and the depth image D4 808 may be expressed as fractions of a width and a height of the color image C1 801 having the base resolution. That is, the width and the height may have values of 1/N and 1/M, respectively. Here, values N and M denote natural numbers. For example, the values N and M may correspond to 2 or 4, and a resolution of the depth image D1 805, the depth image D2 806, the depth image D3 807, and the depth image D4 808 may correspond to 1/2, 1/4, 1/8, 1/16, and the like of the base resolution.

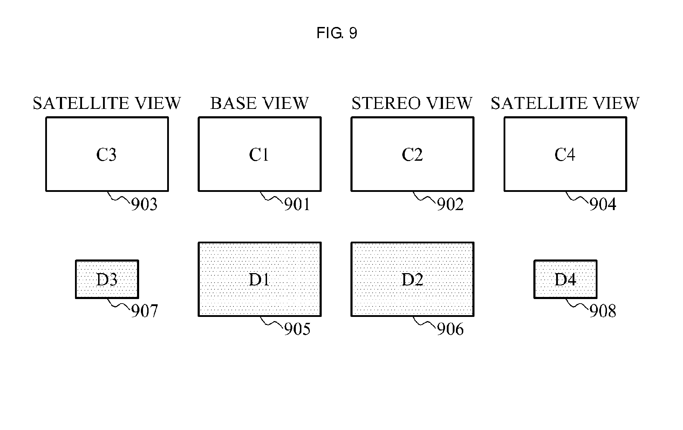

FIG. 9 illustrates a further image format for a multi-view 3D image according to example embodiments.

Referring to FIG. 9, an image format may include a color image C1 901 and a depth image D1 905 corresponding to a base view, a color image C2 902 and a depth image D2 906 corresponding to a stereo view, and a color image C3 903 a color image C4 904, a depth image D3 907, and a depth image D4 908 corresponding to a satellite view.

In this instance, as illustrated in FIG. 9, a resolution of the depth image D3 907 and the depth image D4 908 may be different from a base resolution that corresponds to a resolution of the color image C1 901 corresponding to the base view. That is, the resolution of the depth image D3 907, and the depth image D4 908 may be lower than the base resolution.

In particular, a width and a height of each of the depth image D3 907 and the depth image D4 908 may be expressed as fractions of a width and a height of the color image C1 901 having the base resolution. That is, the width and the height may have values of 1/N and 1/M, respectively. Here, values N and M denote natural numbers. For example, the values N and M may correspond to 2 or 4, and a resolution of the depth image D3 907 and the depth image D4 908 may correspond to 1/2, 1/4, 1/8, 1/16, and the like of the base resolution.

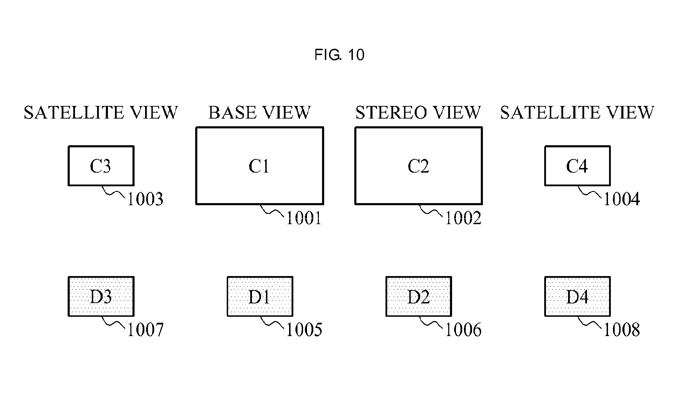

FIG. 10 illustrates another image format for a multi-view 3D image according to example embodiments.

Referring to FIG. 10, an image format may include a color image C1 1001 and a depth image D1 1005 corresponding to a base view, a color image C2 1002 and a depth image D2 1006 corresponding to a stereo view, and a color image C3 1003 a color image C4 1004, a depth image D3 1007, and a depth image D4 1008 corresponding to a satellite view.

In this instance, as illustrated in FIG. 10, a resolution of the color image C3 1003, the color image C4 1004, the depth image D1 1005, the depth image D2 1006, the depth image D3 1007, and the depth image D4 1008 may be different from a base resolution that corresponds to a resolution of the color image C1 1001 corresponding to the base view. That is, the resolution of the color image C3 1003, the color image C4 1004, the depth image D1 1005, the depth image D2 1006, the depth image D3 1007, and the depth image D4 1008 may be lower than the base resolution.

In particular, a width and a height of each of the color image C3 1003, the color image C4 1004, the depth image D1 1005, the depth image D2 1006, the depth image D3 1007, and the depth image D4 1008 may be expressed as fractions of a width and a height of the color image C1 1001 having the base resolution. That is, the width and the height may have values of 1/N and 1/M, respectively. Here, values N and M denote natural numbers. For example, the values N and M may correspond to 2 or 4, and a resolution of the color image C3 1003, the color image C4 1004, the depth image D1 1005, the depth image D2 1006, the depth image D3 1007, and the depth image D4 1008 may correspond to 1/2, 1/4, 1/8, 1/16, and the like of the base resolution.

Referring to FIGS. 6 through 10, the base resolution is presumed to be a resolution of a color image of a base view. However, according to a system configuration, the base resolution may be set to a resolution of a color image of a base view and a resolution of a color image of a stereo view.

FIG. 11 illustrates syntax of additional information according to example embodiments.

Referring to FIG. 11, additional information may be divided into information about an image mode of a 3D image format, additional information based on a color image corresponding to a satellite view, and additional information based on a depth image.

The additional information based on a color image corresponding to a satellite view may include satellite_view_flag, satellite_color_scale_flag, satellite_color_scale_ratio, and satellite_color_scale_method. The additional information based on a depth image may include 3dv_depth_property, depth_scale_flag, depth_scale_ratio, depth_scale_method, and depth_capturing_flag.

Hereinafter, each of the additional information will be further described.

### (1) 3dv_format_mode

Here, a 3dv_format_mode may refer to information about an image mode of an image format. In particular, the information about an image mode may indicate whether a compressed bitstream corresponds to a 2D image, a stereo 3D image, or a multi-view 3D image. As an example, a 3dv_format_mode may be used to determine a scheme for reproducing an image in an image reproduction device.

In this example, when a display to be used to display an image corresponds to a 3D display, and the 3dv_format_mode corresponds to the 2D image, the image reproduction device may refer to the 3dv_format_mode to reproduce the 2D image in a 2D image mode, or convert the 2D image into a 3D image through an image conversion device, and then reproduce the converted 3D image in a 3D image mode.

When a display to be used to display an image corresponds to a 2D display, and the 3dv_format_mode corresponds to the multi-view 3D image, the image reproduction device may refer to the 3dv_format_mode to convert the multi-view 3D image into a 2D image through the image conversion device, and then reproduce the converted 2D image in a 2D image mode, or display that an image may not be reproduced.

### (2) satellite_view_flag

An image format for a multi-view 3D image may include a color image and a depth image corresponding to a satellite view for generating a virtual view in addition to a stereo view. Here, a satellite_view_flag may refer to identification information indicating whether the color image corresponding to the satellite view is included in the image format. The satellite_view_flag may be applied to the image format described in the foregoing with reference to FIGS. 8 through 10.

### (3) satellite_color_scale_flag

Here, a satellite_color_scale_flag may presume that a color image corresponding to a satellite view is included in a bitstream according to the satellite_view_flag. That is, the satellite_color_scale_flag may refer to identification information indicating whether a resolution of the color image of the satellite view included in the bitstream is different from a base resolution. The satellite_color_scale_flag may be applied to the image format described in the foregoing with reference to FIGS. 8 through 10.

### (4) satellite_color_scale_ratio

Here, a satellite_color_scale_ratio may refer to ratio information indicating a ratio of a resolution of a color image of a satellite view included in a bitstream to a base resolution. That is, the satellite_color_scale_ratio may refer to a difference in resolution between the resolution of the color image of the satellite view and the base resolution. The satellite_color_scale_ratio may be applied to the image format described in the foregoing with reference to FIG. 10.

### (5) satellite_color_scale_method

Here, a satellite_color_scale_method may indicate a resolution conversion scheme for an inter-view prediction scheme of a color image of a satellite view included in a bitstream. The inter-view prediction scheme may be applied to images corresponding to different views, and having the same resolution. Thus, when images corresponding to different views have different resolutions, a resolution conversion scheme for having the same resolution may be transmitted, as additional information, to an image reproduction device. In this instance, an image transmission device may encode the color image of the satellite view to a P-view with reference to a color image of a reference image as an I-view.

For example, when a resolution of the color image of the satellite view is lower than a base resolution corresponding to a resolution of the color image of the base view, an interpolation scheme for enhancing the resolution of the color image of the satellite view may be expressed by satellite_color_scale_method. For example, an interpolation scheme such as Quarter pixel (Q-pel) or Half-pel may be used to convert a low-resolution image to a high-resolution image.

### (6) 3dv_depth_property

Here, a 3dv_depth_property may refer to image characteristic information indicating a generating scheme of a depth image included in a bitstream. The 3dv_depth_property may be applied to each depth image of a base view, a stereo view, or a satellite view. In particular, the 3dv_depth_property may refer to information indicating how the depth image is obtained. For example, the 3dv_depth_property may indicate whether the depth image corresponds to synthetic data such as a graphic image, measurement data directly obtained from a depth image camera, or estimation data derived from a color image that is obtained from a color image camera.

The synthetic data may tend to have a high accuracy of a depth value, and a high consistency with a color image. Whereas, the measurement data or the estimation data may have a relatively low accuracy of a depth value, and a relatively low consistency with a color image and thus, a boundary of an object may mismatch between a color image and a depth image. Thus, a depth image corresponding to the measurement data or the estimation data may use a postprocessing operation to enhance accuracy in a relationship with a color image. The 3dv_depth_property may be applied to the image format described in the foregoing with reference to FIGS. 6 through 10.

### (7) depth_scale_flag

Here, a depth_scale_flag may refer to identification information indicating whether a resolution of a depth image included in a bitstream is different from a base resolution. The depth_scale_flag may be applied to each depth image of a base view, a stereo view, or a satellite view. Here, a depth image may correspond to the base view, the stereo view, or the satellite view. That is, when the base resolution is set to a resolution of a color image of the base view or a resolution of a color image of the stereo view, a resolution of a depth image of the base view or a resolution of a depth image of the stereo view may be different from the base resolution. The depth_scale_flag may be applied to the image format described in the foregoing with reference to FIGS. 6 through 10.

### (8) depth_scale_ratio

Here, a depth_scale_ratio may refer to ratio information indicating a ratio of a resolution of the color image of a satellite view included in the bitstream to a base resolution. The depth_scale_ratio may be applied to each depth image of a base view, a stereo view, or a satellite view. The base resolution may be set to a resolution of a color image of the base view and a resolution of a color image of the stereo view. The depth_scale_ratio may indicate a difference in resolution between a resolution of the depth image and the base resolution. depth_scale_ratio may be applied to the image format described in the foregoing with reference to FIGS. 6 through 10.

### (9) depth_scale_method

Here, a depth_scale_method may refer to conversion information indicating a resolution conversion scheme of a depth image included in a bitstream of an inter-view prediction scheme. The depth_scale_ratio may be applied to each depth image of a base view, a stereo view, or a satellite view. For example, the depth_scale_method may be applied when a resolution is different between a color image and a depth image corresponding to the same view, or when a resolution is different between depth images corresponding to different views.

The inter-view prediction scheme applied to the depth image may be applied to depth images corresponding to different views, and having the same resolution. Thus, when images corresponding to different views have different resolutions, a resolution conversion scheme related to maintaining the same resolution may be transmitted, as additional information, to an image reproduction device. In this instance, an image transmission device may encode the depth image of the satellite view to a P-view with reference to a depth image of a base view as an I-view.

For example, when a resolution the depth image of the satellite view is lower than a resolution of the depth image of the base view, and the resolution of the depth image of the base view equals a resolution of a color image of a base view corresponding to a base resolution, an interpolation scheme for enhancing a resolution of a depth image of a satellite view may be expressed by the depth_scale_method. When a resolution the depth image of the satellite view equals a resolution of the depth image of the base view, and the resolution of the depth image of the base view is lower than a resolution of the color image of the base view corresponding to the base resolution, an interpolation scheme for enhancing a resolution of the depth image of the satellite view may be expressed by the depth_scale_method. For example, an interpolation scheme such as Q-pel or Half pel may be used to convert a low-resolution image to a high-resolution image.

### (10) depth_capturing_flag

Here, a depth_capturing_flag may refer to cause information indicating a cause of a difference in resolution when a resolution of a depth image included in a bitstream is different from a base resolution. That is, when the resolution of the depth image is different from the base resolution in an image format, the depth_capturing_flag may indicate whether a difference in resolution results from a difference between cameras corresponding to a captured view, or results from decrease in the resolution of the depth image in an operation of converting to an image format.

The additional information illustrated in FIG. 11 corresponds to an example, and may change according to a system configuration. For example, the additional information may include a view characteristic for each depth image and color image. In particular, when a plurality of color images and depth images are included in an image format, the additional information may include information indicating whether the plurality of color images and depth images correspond to a base view, a stereo view, or a satellite view.

FIG. 12 illustrates an encoding/decoding operation based on an inter-view prediction scheme according to example embodiments.

Referring to FIG. 12, an image 1201 may refer to a color image 1, herein referred to as color image (1) 1201, or a depth image 1, herein referred to as depth image (1) 1201, corresponding to a first view. An image 1202 may refer to a color image 2, herein referred to as color image (2) 1202, or a depth image 2, herein referred to as depth image (2) 1202, corresponding to a second view. In this instance, the first view may refer to a base view, and the second view may refer to a stereo view or a satellite view, and the present invention may not be limited thereto. Hereinafter, description will be focused on the color image (2) 1202, which may be similarly applied to the depth image (2) 1202.

An image transmission device may encode the color image (1) 1201 of the first view. The image transmission device may encode, using the color image (1) 1201 of the first view, the depth image (1) 1201 of the first view.

Thereafter, the image transmission device may perform, using the color image (1) 1201 of the first view, an inter-view prediction encoding on for the color image (2) 1202 of the second view. Here, the inter-view prediction encoding may be performed between images having the same resolution. Referring to FIG. 12, a resolution of the color image (2) 1202 to perform the inter-view prediction encoding may be lower than a resolution of the color image (1) 1201.

In this instance, the image transmission device may scale down the color image (1) 1201 so that the color image (1) 1201 may have the same resolution as the color image (2) 1202. A color image (1) 1203 may refer to a result of scaling down the color image (1) 1201. The image transmission device may encode a color image (2) 1204 according to an inter-view prediction scheme based on the color image (1) 1203, obtained by scaling down the color image (1) 1201. Here, the color image (2) 1202 may be equal to the color image (2) 1204.

In particular, the image transmission device may generate a prediction image corresponding to the color image (2) 1204 with reference to the color image (1) 1203, and encode a residual signal corresponding to a difference between an actual image and the prediction image. Then, the image transmission device may transmit, to an image reproduction device through a bitstream, the residual signal and the color image (1) 1201 corresponding to a reference image. In this instance, the image transmission device may set, to a resolution conversion scheme, a scheme applied when scaling down the color image (1) 1201, include additional information, and transmit the additional information to an image reproduction device through a bitstream.

A decoding operation may be performed similarly to an encoding operation.

An image reproduction device may decode the color image (1) 1201 included in a bitstream, and decode the depth image (1) 1202 with reference to the color image (1) 1201.

Thereafter, the image reproduction device may decode the color image (2) 1202 by applying an inter-view prediction scheme. The image reproduction device may receive a residual signal associated with the color image (1) 1201 and the color image (2) 1202. When a resolution is different between the color image (1) 1201 and the color image (2) 1202, a resolution of the color image (1) 1201 may be converted so that a resolution of the color image (1) 1201 equals a resolution of the color image (2) 1202. In this instance, the bitstream may include, as additional information, a resolution conversion scheme applied when encoding the color image (2) 1202 according to the inter-view prediction scheme. Then, the image reproduction device may output the color image (1) 1203 by scaling down the color image (1) 1201 according to the resolution conversion scheme corresponding to the additional information. Thereafter, the image reproduction device may generate a prediction image of the color image (2) 1204 with reference to the color image (1) 1203, and then restore the color image (2) 1204 by adding the residual signal to the prediction image of the color image (2) 1204.

Thereafter, the image reproduction device may use a color image and a depth image having the same resolution to generate a 3D image. Thus, the image reproduction device may scale up the restored color image (2) 1204 to have the same resolution as the color image (1) 1201 having a base resolution. Here, a bilateral or trilateral filter may be applied when scaling up a depth image.

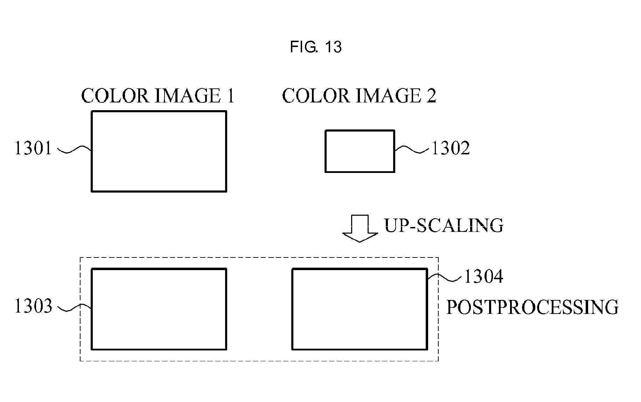

FIG. 13 illustrates an operation of postprocessing a color image according to example embodiments.

Referring to FIG. 13, a color image (1) 1301 may correspond to a first view, and a color image (2) 1302 may correspond to a second view. The color image (1) 1301 and the color image (2) 1302 may refer to a result of decoding an image according to an inter-view prediction scheme.

An image reproduction device may generate a multi-view 3D image using the color image (1) 1301 and the color image (2) 1302 indicating different views. To generate the multi-view 3D image, the color image (1) 1301 and the color image (2) 1302 indicating different views may have the same resolution.

In this instance, a resolution of the color image (1) 1301 may be presumed to be a base resolution. The color image (2) 1302 may have a lower resolution when compared to the color image (1) 1301. The image reproduction device may change a resolution of the color image (2) 1302 by scaling up the color image (2) 1302. To enhance an image quality, the image reproduction device may postprocess an up-scaled color image (2) 1304 with reference to a color image (1) 1303. A filtering operation such as a Wiener filter may be applied in a postprocessing operation, and an algorithm for enhancing an image quality may be applied.

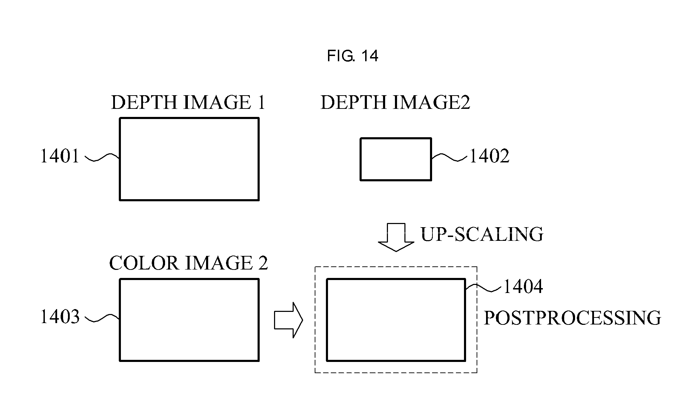

FIG. 14 illustrates an operation of postprocessing a depth image according to example embodiments.

Referring to FIG. 14, a depth image (1) 1401 may correspond to a first view, and a depth image (2) 1402 may correspond to a second view. The depth image (1) 1401 and the depth image (2) 1402 may refer to a result of decoding an image according to an inter-view prediction scheme.

An image reproduction device may generate a multi-view 3D image using the depth image (1) 1401 and the depth image (2) 1402 indicating different views. To generate the multi-view 3D image, the depth image (1) 1401 and the depth image (2) 1402 indicating different views may have the same resolution.

In this instance, a resolution of the depth image (1) 1401 may be presumed to be a base resolution. The depth image (2) 1402 may have a lower resolution when compared to the depth image (1) 1401. The image reproduction device may change a resolution of the depth image (2) 1402 by scaling up the depth image (2) 1402. To enhance an image quality, the image reproduction device may postprocess an up-scaled depth image (2) 1404 with reference to a color image (1) 1403.

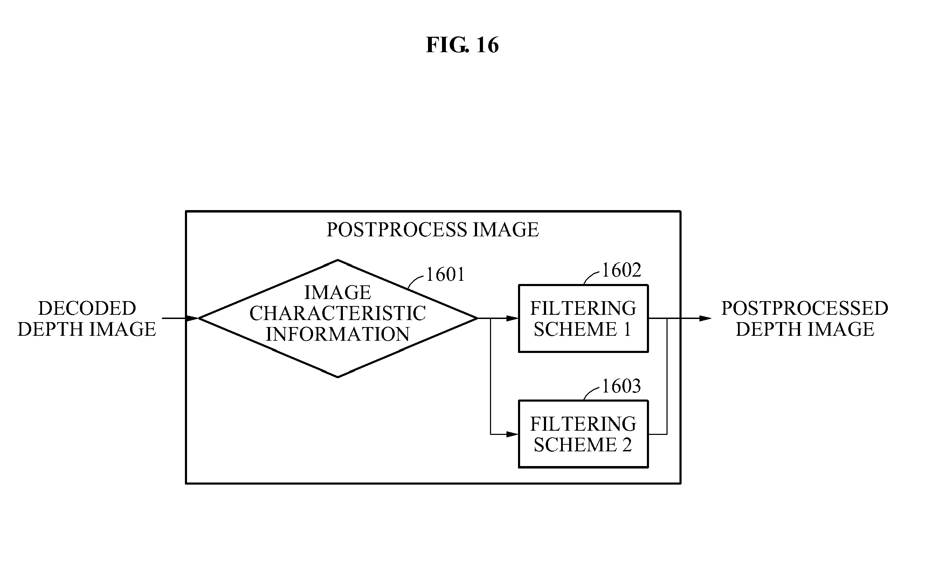

A filtering operation such as a Wiener filter may be applied in a postprocessing operation, and an algorithm for enhancing an image quality may be applied. In particular, a postprocessing operation of a depth image may be separately applied according to image characteristic information of the depth image, which will be further described with reference to FIG. 16.

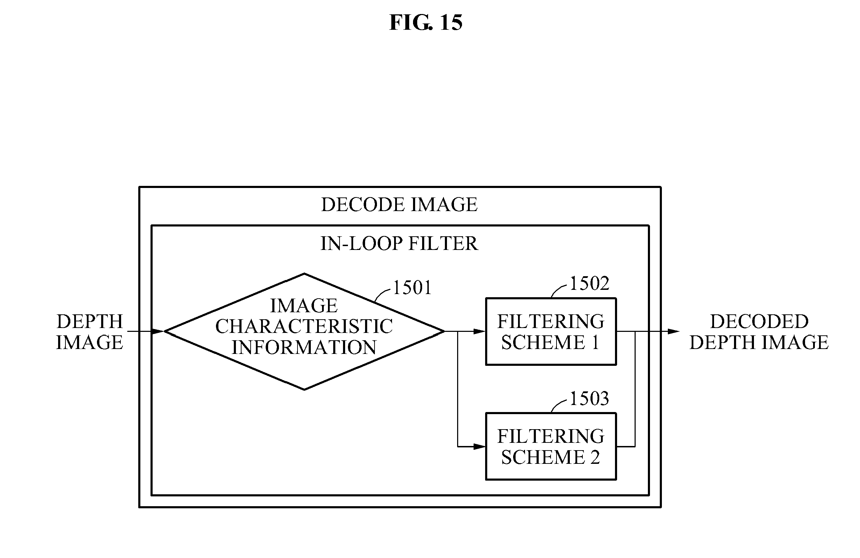

FIG. 15 illustrates an operation of decoding a depth image based on image characteristic information according to example embodiments.

As described in the foregoing, an image reproduction device may decode a depth image. For example, the image reproduction device may decode, using an in-loop filter, a depth image. In this instance, the image reproduction device may determine image characteristic information of the depth image in operation 1501, and apply a filtering scheme differently based on the image characteristic information. Here, the image characteristic information may refer to a generating scheme of the depth image. For example, the image characteristic information of the depth image may indicate whether the depth image corresponds to synthetic data such as a graphic image, measurement data directly obtained from a depth image camera, or estimation data derived from a color image that is obtained from a color image camera.

In operation 1502, the image reproduction device may decode a relatively accurate depth image such as the synthetic data according to a filtering scheme 1 such as a bilateral filter or a Wiener filter. In operation 1503, the image reproduction device may decode a relatively inaccurate depth image such as the measurement data or the estimation data according to a filtering scheme 2 without applying an in-loop filter.

FIG. 16 illustrates an operation of postprocessing a depth image based on image characteristic information according to example embodiments.

As described in the foregoing, an image reproduction device may postprocess a decoded depth image. In this instance, the image reproduction device may determine image characteristic information of the depth image in operation 1601, and apply a filtering scheme based on the image characteristic information. Here, the image characteristic information may refer to a generating scheme of the depth image. For example, the image characteristic information of the depth image may indicate whether the depth image corresponds to synthetic data such as a graphic image, measurement data directly obtained from a depth image camera, or estimation data derived from a color image that is obtained from a color image camera.

In operation 1602, the image reproduction device may postprocess a relatively accurate depth image such as the synthetic data according to a filtering scheme 1 such as a Max filter for clarifying a boundary of an object. In operation 1603, the image reproduction device may postprocess a relatively inaccurate depth image such as the measurement data or the estimation data according to a filtering scheme 2 that corrects or eliminates an inaccurate portion of the depth image with reference to information about a color image.

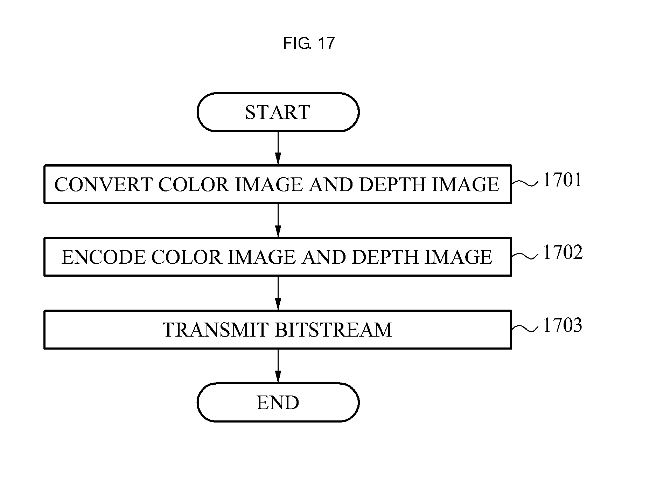

FIG. 17 illustrates a method of transmitting an image according to example embodiments.

In operation 1701, an image transmission device may convert a color image and a depth image corresponding to a plurality of views according to a 3D image format. Here, the color image and the depth image may correspond to at least one of a base view, a stereo view, and a satellite view.

In operation 1702, the image transmission device may encode the color image and the depth image. For example, the image transmission device may encode the color image and the depth image according to an inter-view prediction scheme.

In operation 1703, the image transmission device may transmit, to an image reproduction device, a bitstream including additional information associated with the 3D image format, and the color image and the depth image converted according to the 3D image format. For example, the bitstream may include at least one of information about an image mode of the 3D image format, additional information based on the color image corresponding to a satellite view, and additional information based on the depth image.

In particular, the additional information based on the color image corresponding to a satellite view comprises at least one of identification information indicating whether the color image of a satellite view is included in the bitstream, identification information indicating whether a resolution of the color image of a satellite view included in the bitstream is different from a base resolution, ratio information indicating a ratio of a resolution of the color image of a satellite view included in the bitstream to a base resolution, and conversion information indicating a resolution conversion scheme for an inter-view prediction scheme of the color image of a satellite view included in the bitstream.

The additional information based on the depth image may include at least one of image characteristic information indicating a generating scheme of the depth image included in the bitstream, identification information indicating whether a resolution of the depth image included in the bitstream is different from a base resolution, ratio information indicating a ratio of a resolution of the depth image included in the bitstream to a base resolution, conversion information indicating a resolution conversion scheme of the depth image included in the bitstream for an inter-view prediction scheme, and cause information indicating a cause of a difference in resolution when a resolution of the depth image included in the bitstream is different from a base resolution.

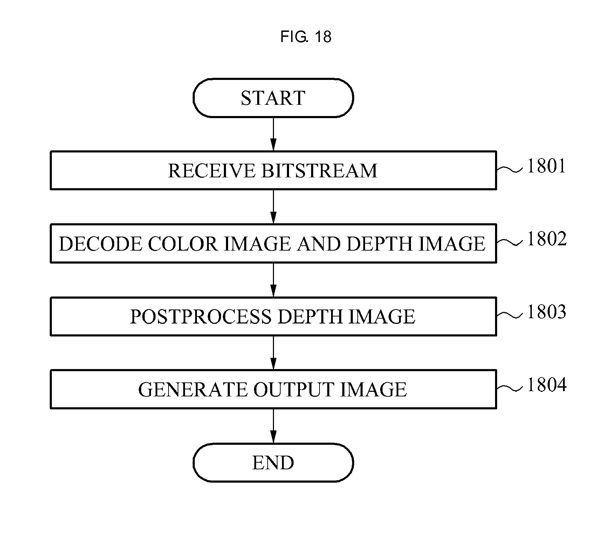

FIG. 18 illustrates a method of reproducing an image according to example embodiments.

In operation 1801, an image reproduction device may receive, from an image transmission device, a bitstream including a color image and a depth image of a plurality of views converted according to a 3D image format, and additional information associated with the 3D image format. FIG. 17 may be referred to for a description of the additional information omitted here.

In operation 1802, the image reproduction device may decode the color image and the depth image included in the bitstream according to an inter-view prediction scheme.

In operation 1803, the image reproduction device may perform a postprocessing on the depth image to enhance an image quality of the color image or the depth image.

In operation 1804, the image reproduction device may generate an output image to be reproduced in a display device by processing the color image and the depth image according to the additional information.

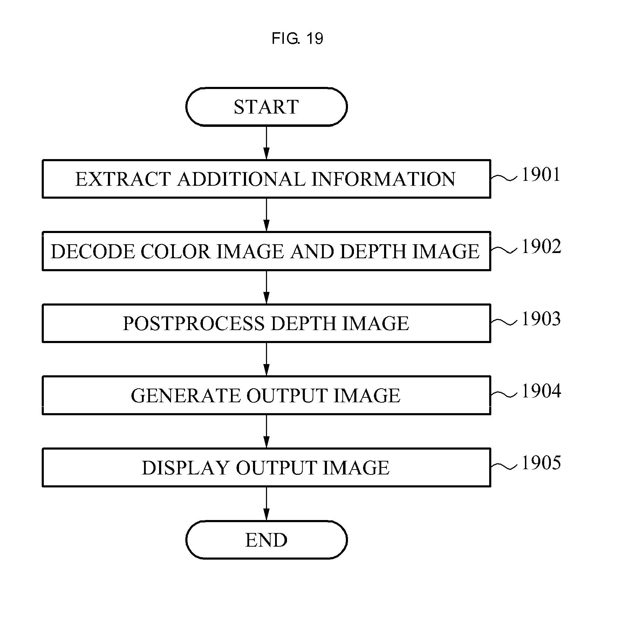

FIG. 19 illustrates another method of reproducing an image according to example embodiments.

In operation 1901, an image reproduction device may extract, from a bitstream, additional information associated with a 3D image format. FIGS. 6 through 10 may be referred to for descriptions of the 3D image format omitted here, and FIG. 11 may be referred to for descriptions of the additional information omitted here.

In operation 1902, the image reproduction device may decode a color image and a depth image included in the bitstream according to an inter-view prediction scheme.

In operation 1903, the image reproduction device may perform a postprocessing for enhancing an image quality of the decoded color image or depth image.

In operation 1904, the image reproduction device may generate an output image by processing a color image and a depth image of a plurality of views according to the additional information.

In operation 1905, the image reproduction device may display the output image.

The method of transmitting an image and the method of reproducing an image according to the above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

The methods may be executed on a general purpose computer or processor or may be executed on a particular machine such as the image transmission device, image reproduction device and imaging system described herein. Any one or more of the software modules described herein may be executed by a dedicated processor unique to that unit or by a processor common to one or more of the modules.

Although embodiments have been shown and described, it would be appreciated by those skilled in the art that changes may be made in these embodiments without departing from the principles of the disclosure, the scope of which is defined by the claims.

## Claims

1. An image transmission device, comprising:
an image converter to convert a color image and a depth image corresponding to a plurality of views according to a three-dimensional (3D) image format; and
a bitstream transmitter to transmit a bitstream including additional information associated with the 3D image format, and the converted color image and the converted depth image.

2. The image transmission device of claim 1, wherein the additional information comprises cause information indicating a cause of a difference in resolution when a resolution of the depth image included in the bitstream is different from a base resolution.

3. The image transmission device of claim 1 or 2, further comprising:
an image encoder to encode the color image and the depth image according to an inter-view prediction scheme,
wherein the bitstream transmitter transmits a bitstream including the color image and the depth image encoded according to the inter-view prediction scheme.

4. An image reproduction device, comprising:
a bitstream receiver to receive a bitstream including a color image and a depth image of a plurality of views converted according to a three-dimensional (3D) image format, and additional information associated with the 3D image format; and
an image generator to generate an output image to be reproduced in a display device by processing the color image and the depth image according to the additional information.

5. The image reproduction device of claim 4, further comprising:
an image decoder to decode the color image and the depth image included in the bitstream according to an inter-view prediction scheme.

6. The image reproduction device of claim 4 or 5, further comprising:
an image postprocessing unit to perform a postprocessing of the depth image to enhance an image quality of the color image and or the depth image.

7. The device of any of the preceding claims, wherein the color image and the depth image correspond to at least one of:
- a base view,
- a stereo view, and
- a satellite view.

8. The device of any of the preceding claims, wherein the bitstream comprises at least one of:
- information about an image mode of the 3D image format,
- additional information based on the color image corresponding to a satellite view, and
- additional information based on the depth image.

9. The device of any of the preceding claims, wherein the additional information is based on the color image corresponding to a satellite view, and comprises at least one of:
- identification information indicating whether the color image of a satellite view is included in the bitstream,
- identification information indicating whether a resolution of the color image of a satellite view included in the bitstream is different from a base resolution, and
- ratio information indicating a ratio of a resolution of the color image of a satellite view included in the bitstream to a base resolution, and conversion information indicating a resolution conversion scheme for an inter-view prediction scheme of the color image of a satellite view included in the bitstream.

10. The device of any of the preceding claims, wherein the additional information is based on the depth image and comprises at least one of:
- image characteristic information indicating a generating scheme of the depth image included in the bitstream,
- identification information indicating whether a resolution of the depth image included in the bitstream is different from a base resolution,
- ratio information indicating a ratio of a resolution of the depth image included in the bitstream to a base resolution,
- conversion information indicating a resolution conversion scheme of the depth image included in the bitstream for an inter-view prediction scheme, and
- cause information indicating a cause of a difference in resolution when a resolution of the depth image included in the bitstream is different from a base resolution.

11. A method of transmitting an image, the method comprising:
converting a color image and a depth image corresponding to a plurality of views according to a three-dimensional (3D) image format; and
transmitting a bitstream including additional information associated with the 3D image format, and the converted color image and the converted depth image.

12. A method of reproducing an image, the method comprising:
receiving a bitstream including a color image and a depth image of a plurality of views converted according to a three-dimensional (3D) image format, and additional information associated with the 3D image format; and
generating an output image to be reproduced in a display device by processing the color image and the depth image according to the additional information.

13. A non-transitory computer-readable medium comprising a program for instructing a computer to perform the method of claim 11 or 12.

14. An imaging system comprising:
an image transmission device to transmit a bitstream comprising a color image and a depth image each corresponding to either a plurality of image views according to a three-dimensional (3D) image format or to an image mode of the 3D image format; and
an image reproduction device to receive the bitstream transmitted by the image transmission device,
wherein the transmitted bitstream further comprises additional information associated with an or the image mode of the 3D image format; and
wherein the image reproduction device generates and outputs an output image to be displayed or reproduced in a display device by processing the color image and the depth image according to the additional information.

15. An imaging system according to claim 14, wherein the 3D image format comprises at least one of the plurality of image views.
